# EUROPEAN PATENT SPECIFICATION

(11) **EP 4 405 202 B1**
(45) Date of publication and mention of the grant of the patent: **08.07.2026**
(21) Application number: 22782533.8
(22) Date of filing: 22.09.2022
(51) Int. Cl.: B60L 58/18, H02J 7/00, B60L 3/12, B60L 15/00, B60L 15/06, B60L 53/20, G01R 31/396, H02J 7/50, H01M 10/44, H01M 10/48, G06F 13/38, H01M 10/42

(54) **BATTERY ARRANGEMENT AND METHOD FOR CONTROLLING A BATTERY ARRANGEMENT WITH OFFSET CORRECTION**
BATTERIEANORDNUNG UND STEUERUNGSVERFAHREN FÜR EINE BATTERIEANORDNUNG MIT OFFSET-KORREKTUR
ENSEMBLE DE BATTERIE ET PROCÉDÉ DE CONTRÔLE D'UN ENSEMBLE DE BATTERIE AVEC CORRECTION DE DÉCALAGE

(30) Priority: 23.09.2021 US 202163247473 P
(43) Date of publication of application: 31.07.2024
(73) Proprietor: Volvo Car Corporation, 405 31 Göteborg (SE)
(72) Inventor: EKSTRÖM, Markus, 40531 Göteborg (SE)
(74) Representative: Kransell & Wennborg KB
(86) International application number: PCT/EP2022/076428
(87) International publication number: WO 2023/046858

(56) References cited:
- EP-A1- 3 536 542
- EP-A2- 2 823 991
- CN-A- 104 953 675
- DE-A1- 102011 003 863
- DE-A1- 102012 202 853
- DE-A1- 102013 206 942
- DE-A1- 102014 202 410
- GB-A- 2 554 788
- US-A1- 2012 105 001

## Description

### TECHNICAL FIELD

The present disclosure relates to electric and/or hybrid electric vehicle drive technologies. In particular, the present disclosure relates to a battery arrangement, a method for controlling such a battery arrangement, and a vehicle comprising such a battery arrangement.

### BACKGROUND ART

Electro mobility is an increasingly respected part of today's and tomorrow's mobility. For example, in view of regional and/or global climate targets, there is a need for practical and efficient electric drive technologies.

It is known from practical experience that electric drive technology is limited, for example, by the battery arrangements available today. This concerns, for example, limitations given by the complex requirements, e.g., a large number of charging cycles, performance requirements in terms of electrical power output, available capacity, operating conditions, etc.

For example, controlling a battery arrangement sets high requirements if an electric machine is to be operated with it. In this context, DE 10 2014 202 410 A1 shows an energy supply assembly for an electrically operated vehicle. EP 2 823 991 A2 discloses a daisy chain communication bus and protocol. DE 10 2013 206 942 A1 shows a battery system comprising a battery module arranged in a battery string. US 2012/105001 A1 refers to a battery management system including several subsystem blocks, an energy storage master unit, and several battery pack systems. CN 104 953 675 A discloses battery arrangement for connecting to an electric machine in a vehicle, comprising: a first string,second string, and third string of cells, each string being connectable to the electric machine as one respective phase; cell controllers forming slave nodes, and a master node.

### SUMMARY

There may, therefore, be a need to provide improved control of a battery arrangement or at least a part thereof.

The object of the present invention is solved by the subject-matter of the appended independent claims, wherein further embodiments are incorporated in the dependent claims.

According to a first aspect, there is provided:
A battery arrangement for connecting to an electric machine and/or a power supply, comprising:
a number of battery cells, of which a first sub-number connected in series form a first string, a second sub-number connected in series form a second string, and a third sub-number connected in series form a third string, the first string, second string and third string being connectable to the electric machine as one respective phase;
a number of battery cell controllers forming a number of slave nodes, each battery cell controller being connected to at least one terminal of an assigned one of the number of battery cells, and each battery cell controller comprising at least a power electronics arrangement to selectively connect or disconnect (to) the at least one terminal; and
a master node, configured to provide a virtual modulator signal to one or more of, multiple of and/or each of the number of slave nodes;
the number of battery cell controllers, particularly the receiving number of battery cell controllers, being further configured to correct the respective signal generation and/or their respective signal generation based on the virtual modulator signal, and
wherein the master node is further configured to generate a virtual sine wave, by broadcasting propulsion request info with predetermined pace, as control information to be used by the slave nodes for controlling the battery cells, the virtual wave signal being the virtual modulator signal, and wherein the virtual sine wave is used by the slave nodes to generate a corresponding signal by switching the assigned one of the number of battery cells on and off.

In this way, signal offset can be corrected, thereby improving accuracy of controlling the battery arrangement.

As used herein, batteries, which may be arranged in a battery arrangement or assembly as described herein, in electric vehicles and hybrid vehicles supply the electric motor(s), i.e. the electric machine, with electrical energy, which is converted into mechanical kinetic energy for propulsion.

Further, each one of the number of battery cells, which may also be referred to as battery segments and which may be e.g. of Li-ion technology, is a power source in itself. For example, these may also power the battery cell controller.

For example, each of the number of battery cells board may contain four terminals or output points. Two of these may be AC terminals or power points and two may be isolated DC terminals or power points. The battery cell connection to the outside world may be done through these points.

When a battery cell is connected to one or more other battery cells, here, the number of battery cell controllers may be made between the two cells AC points, and not between cell terminals as in conventional technologies. Since the battery cell itself can internally, i.e. by the battery cell controller connected thereto, control if and how it should be connected to the AC-terminals, this allows for the battery cell to disconnect itself from the main battery without affecting the complete battery arrangement or pack performance significantly. This mode may also be referred to as bypass mode and may be default. The battery cell controller may be designed to be one per battery cell or even one per two or more battery cells.

In electric and hybrid vehicles, the battery cell controller and/or the power electronics, among other things, control the electric drive and establish a connection between the electric motor and the, e.g. high-voltage, battery and/or individual battery cells.

Further, as used herein, a master node may be configured to connect to each one of the number of battery cell controllers, which may also be referred to as a number of slave nodes. The master node may be configured to broadcast information or data, e.g. transmitted as a message, which may be of a predefined format, to each one of the slave nodes. Likewise, the each slave node, or one slave node of each string, may be configured to transmit information or data, e.g. in a message of a predefined format, to the master node and/or to one or more of the other slave nodes. Further, the one or more, or even each of the, slave nodes may be configured to broadcast information or data within the system of the battery arrangement. For example, the master node may be configured, e.g. by a communication interface, to connect to the one or more slave nodes by wireless communication or another galvanic isolated communication.

Further, the master node is configured to generate a virtual sine wave as control information to be used by the slave nodes for controlling the battery cells, e.g. to be switched on and off, etc. The virtual sine wave is used by the slave nodes to generate a corresponding signal by switching the batteries on and off.

Further, for example, there may be a master node / slave node work split, providing distributed feedback control. The master node may be configured to request one or more of e.g. modulator phase current, phase angle, present cycle time and resolver angle every millisecond (ms). The slave nodes may run with a closed loop phase current control of about 10kHz, and may comprise an on-board current sensor to achieve desired phase current, and may detect or determine cycle time, current set point and resolver angle updated every millisecond (ms). As an option, in order to increase control performance the slave node may further measure a phase between current and voltage to adjust its own phase. The slave node may further comprise an internal slave current control.

Optionally, the virtual modulator signal may comprise a modulator angle.

Optionally, the number of battery cell controllers may be further configured to compare the virtual modulator signal provided by the master node with the respective own modulator angle to determine correction of the angle.

Optionally, the correction may comprise changing switching timing of the power electronics arrangement.

Optionally, the power electronics arrangement comprising a number of power switches configured to selectively connect or disconnect the respective sub-number of battery cells based on the control information message.

Optionally, there is defined a clocked update event having a specified time interval between each clocked update event, in which time interval bidirectional data transmission between the master node and the number of slave nodes is scheduled.

Optionally, the data transmission may be scheduled to allow broadcasting the virtual modulator signal by the master node and providing at string-specific feedback information of each one of the first string, second string and third string from at least one slave node of each string to the master node, within the specified time interval.

Optionally, control information provided by the master node may be defined to be valid from one clocked update event to the next and to be used by the number of slave nodes from the one clocked update event until the next clocked update event.

Optionally, the master node may be further configured to broadcast the control information message upon or after the clocked update event in a scheduled manner.

Optionally, the master node may be further configured to receive for each clocked update event a vehicle propulsion request signal associated with the electric machine and/or the power supply, and the master node being further configured to determine the control information or updated control information to be broadcasted based on at least the received vehicle propulsion request signal. This request may be sent from a vehicle controller controlling e.g. the drive and/or propulsion of the vehicle.

Optionally, the clocked update event may be configured to trigger the number of slave nodes to acquire at least one battery cell parameter at a common timepoint, the number of slave nodes being further configured to provide the acquired at least one battery cell parameter to the master node and/or the one or more other of the number of slave nodes within the specified time interval.

Optionally, an interval between each clocked update event may be in the millisecond range.

Optionally, the master node may be further configured to connect to each of the first string, second string and third string via a wireless communication interface or other galvanic isolated communication method.

Optionally, the number of slave nodes may be further configured to connect to the master node via a wireless communication interface or other galvanic isolated communication method.

Optionally, the number of slave nodes each may have an assigned identifier to be identified and/or addressed by the master node.

Optionally, the number of slave nodes each may have an assigned Media-Access-Control, MAC, address to be identified and/or addressed by the master node.

Optionally, the power electronics arrangement of each of the number of busbar cell connectors may comprise a H-bridge comprising a number of power switches configured to selectively connect to the corresponding battery cell.

Optionally, the master node may be further configured to receive battery cell parameter information from each of the number of slaves.

Optionally, each of the number of slave nodes may be further configured to send batter cell parameter information upon an update event.

In a second aspect, there is provided a vehicle, comprising:
an electric machine; and
a battery arrangement according to any one of the preceding claims, the battery arrangement being connected to the electric machine.

Optionally, the vehicle may further comprise a power supply interface, the battery arrangement being further connected to the power supply interface.

According to a third aspect, there is provided a method for controlling a battery arrangement comprising a number of battery cells, of which a first sub-number connected in series form a first string, a second sub-number connected in series form a second string, and a third sub-number connected in series form a third string, the first string, second string and third string being connectable to the electric machine as one respective phase, a number of battery cell controllers forming a number of slave nodes, each battery cell controller connecting at least one terminal of the number of battery cells within one of the strings, and a master node, the method comprising:
providing, by the master node, a virtual modulator signal to one or more of and/or each of the number of slave nodes; and
correcting, by the number of battery cell controllers, a respective signal generation based on the virtual modulator signal,
generating, by the master node, a virtual sine wave, by broadcasting propulsion request info with predetermined pace, as control information to be used by the slave nodes for controlling the battery cells, the virtual wave signal being the virtual modulator signal, and
generating, by the slave nodes, a corresponding signal by switching the assigned one of the number of battery cells on and off using the virtual sine wave.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a further aspect, there is provided a computer program element for operating a haptic system, which, when being executed by a processing unit, is adapted to perform the method steps of the first aspect.

According to a further aspect, there is provided a computer readable medium having stored the computer program element of the fourth aspect.

It should be noted that the above examples and/or embodiments may be combined with each other irrespective of the aspect involved. Accordingly, the method may be combined with structural features and, likewise, the apparatus and the system may be combined with features described above with regard to the method.

These and other aspects of the present invention will become apparent from and elucidated with reference to the embodiments described hereinafter.

### BRIEF DESCRIPTION OF DRAWINGS

Exemplary embodiments of the disclosure will be described in the following with reference to the following drawings.
Fig. 1 shows in a schematic top view a battery arrangement for connecting to an electric machine and/or a power supply.
Fig. 2A shows in a perspective view a battery cell controller designed to be one per battery cell.
Fig. 2B shows in a perspective view a battery cell controller designed to be one per two or more battery cells.
Fig. 3 shows in an exploded view a structure of a battery cell controller.
Fig. 4 shows in a cross-sectional view a part of the battery arrangement and particularly of the battery cell controller.
Fig. 5 shows in a cross-sectional view a part of the battery arrangement and particularly of the battery cell controller.
Fig. 6 shows in a flow chart a method for deheating a battery cell controller of a battery arrangement for connecting to an electric machine and/or a power supply.
Fig. 7 shows in a schematic top view a battery arrangement for connecting to an electric machine and/or a power supply.
Fig. 8 shows in a timeline the scheduling of multi-directional broadcasting.
Fig. 9 shows in a timeline tasks of a master node and one or more slave nodes, triggered and/or synchronized by an update event.

The figures are merely schematic representations and serve only to illustrate embodiments of the disclosure. Identical or equivalent elements are in principle provided with the same reference signs.

### DESCRIPTION OF EMBODIMENTS

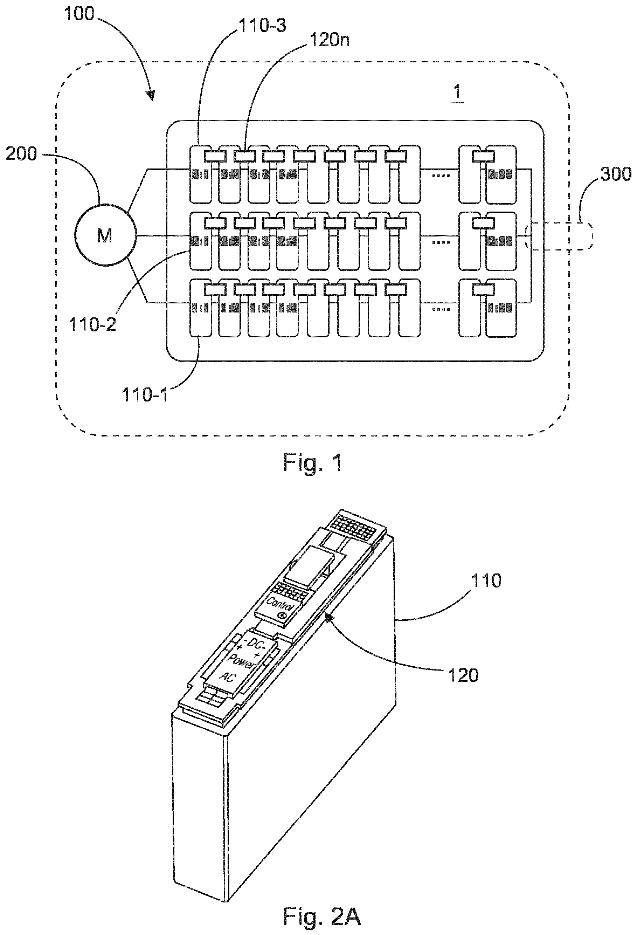

Fig. 1 shows a battery arrangement 100 for connecting to an electric machine 200 and/or a power supply 300. In Fig. 1, the connection(s) between the battery arrangement 100 and the electric machine 200 is (are) indicated by solid lines. The electric machine 200 is a e.g. three-phase electric motor, which is, for example, part of a vehicle 1 or the vehicle's powertrain or drive. The battery arrangement 100 is configured to provide electric energy to the electric machine 200 and/or the power supply and/or to be charged via the power supply.

The battery arrangement 100 comprises a number of battery cells 110, which are connected in series in three strings, providing three phases to run the electric machine 200, i.e. each string forms one phase if connected to the electric machine 200. The three strings are indicated in Fig. 1 by the addition of the reference sign 110 with -1, -2 and -3. In other words, as shown in Fig. 1, a first sub-number of the battery cells 110 connected in series form a first string, a second sub-number of the battery cells 110 connected in series form a second string, and a third sub-number of the battery cells 110 connected in series form a third string, the first string, second string and third string being connectable to the electric machine 200 as one respective phase.

Further, if the battery cells 110 are connected in a suitable number to reach a desired voltage, the battery arrangement 100 may also be connected to the power supply, e.g. a mains with 50 Hz or the like, and the battery cells 110 may be charged by the power supply or may supply the net with energy from the battery cells 110.

The battery arrangement 100 further comprises a number of battery cell controllers 120, each being connectable or connected to a terminal of at least one of the number of battery cells 110 within one string. The number of battery cell controllers 120 may also be referred to as a number of nodes, i.e. a number of slave nodes, as will be explained in more detail further below.

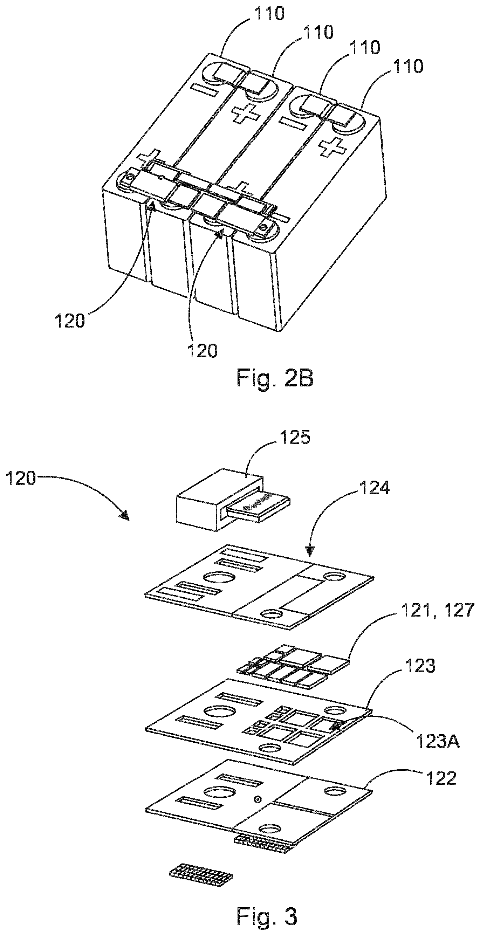

Thereby, the battery cell controller 120 may be designed to be one per battery cell 110 as shown in Fig. 2A, or one per two or more battery cells 110 as shown in Fig. 2B. Each of the number of battery cells 110 comprises four terminals or output points. Two of these may be AC terminals or power points and two may be isolated DC terminals or power points, as indicated in Fig. 2A for one electric pole by AC and DC.

Now referring to Fig. 3, which shows in an exploded view a structure of the battery cell controller 120. Each battery cell controller 120 comprises a power electronics arrangement 121, which is embedded in a multi-layer structure, which may also be referred to as at least a kind of printed circuit board (pcb) or a composition of several pcb or parts of it.

As shown in Fig. 3, the pcb of the battery cell controller 120 may be formed in multiple layers, a base or first layer 122 may comprise at least a section made of a metal core or metal back and may be configured, in Fig. 3 by respective through holes, to engage the respective terminal of the battery cell 110, thereby forming at least a part of a busbar. Further, an intermediate layer 123 comprises a number of through holes 123A, forming a frame structure, in which the power electronics arrangement 121 is held in place. Furthermore, a top or second layer 124 comprises at least a section made of the metal core or metal back and is configured, in Fig. 3 by respective through holes, to engage the respective terminal, thereby forming at least a part of a busbar. For example, the first layer 122 may be formed as a pcb layer where e.g. two busbar parts may be made out of metal backed pcb. The intermediate layer may be formed from e.g. a standard PCB comprising one or more through holes in place to locate the embedded power electronics arrangement 121. On top of the layer, a controller unit or chip 125 and/or a transformer core may be arranged.

The power electronics arrangement 121 comprises a number of power switches, such as FET, MOSFET, or the like. The second layer may be formed from a standard pcb as well as two metal backed pcb.

Still referring to Fig. 3, the power electronics arrangement 121 may be arranged between the base or first layer 122 and the top or second layer 124, thereby contacting the conductive material of at least one of the layers.

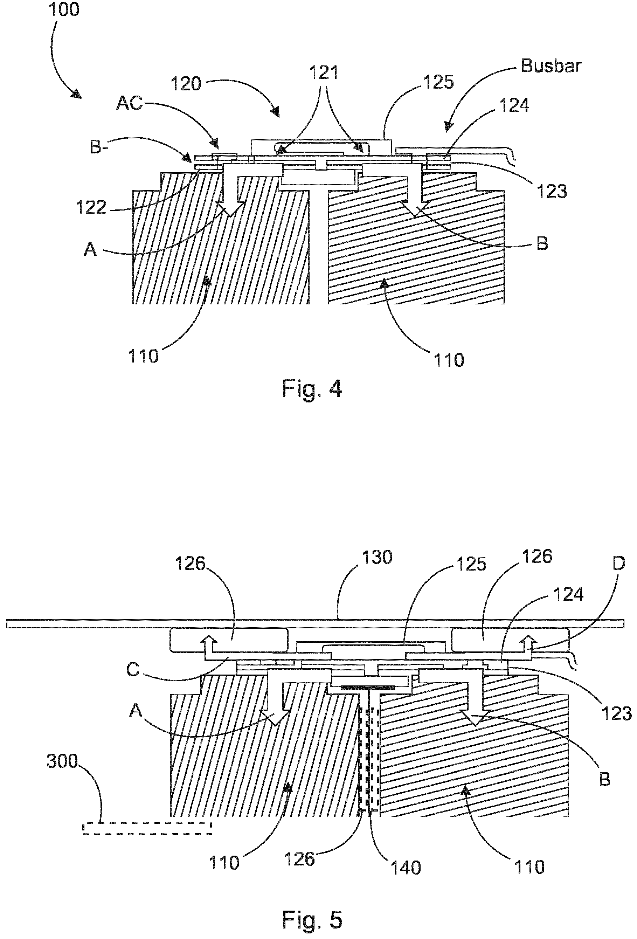

Fig. 4 shows in a cross-sectional view a part of the battery arrangement 100 and particularly of the battery cell controller 120. As indicated in Fig. 4 by arrows A and B, each battery cell controller 120 comprises or forms a first thermal conduction path extending from the power electronics arrangement via the terminal to a body of the respective battery cell 110. Thereby, the power electronics arrangement 121 contacts the respective terminal via a conductive material, i.e. the above metal core or metal back, integrated in the number of battery cell controllers 120, as explained above.

Fig. 5 shows in a cross-section view a part of the battery arrangement 100 and particularly of the battery cell controller 120. As indicated in Fig. 5 by arrows C and D, the number of battery cell controllers 120 further comprises or forms a second thermal conduction path extending from the power electronics arrangement 121 via the terminal and/or the body of the battery cell 110 to a casing 130 of the respective battery cell 110 and/or the battery arrangement 100. As shown, the casing 130 covers the number of battery cell controllers 120 and contacts a top side of the at least a part of the number of battery cell controllers 120. Further, the casing 130 contacts the number of battery cell controllers 120 via a thermal interface material (TIM) 126, being arranged between at least a part of the number of battery cell controllers and the casing, the thermal interface material being further in contact with the battery cell controller. For example, the thermal interface material 126 may be formed as a pad contacting each of the number of battery cell controllers 120 and the casing 130 two-dimensionally. Further, by way of example, the casing 130 may have an outer surface exposed to ambient air of the battery arrangement 100. Further, the casing 130 may be made of aluminum or an aluminum alloy.

Alternatively or additionally, as indicated in Fig. 5 by a dashed line, the battery arrangement 100 may further comprise a third thermal conduction path arranged and/or formed between the number of battery cells 100 by a heat conducting blade 140 that contacts the body of at least a part of the number of battery cells 100 and/or the number of battery cell controllers 120, and that is exposed to ambient air with respect to the battery arrangement 100. to claim 16, the heat conducting blade being coupled to the body of the number of battery cells and/or the number of battery cell controllers by interconnecting a thermal interface material 126 there between.

In an non-illustrated example, the battery arrangement further comprises a fourth thermal conduction path formed by a number of rails running along of at least a part of the number of battery cell controllers.

Optionally, each of the number of battery cell controllers 120 may be materially bonded to the terminal of the battery cell 110. Alternatively, the connection may be made of a screw connection. For example, the material bonding being formed by a welded bond. Further, the material bonding being formed by laser welding.

Further optionally, the number of battery cells 110 may be connected to at least one refrigerant and/or coolant circuit 400 (indicated in Fig. 5 by dashed lines for only one battery cell 100) through which thermal energy given off from the power electronics arrangement 121 to the body of the number of battery cells 110 can be dissipated.

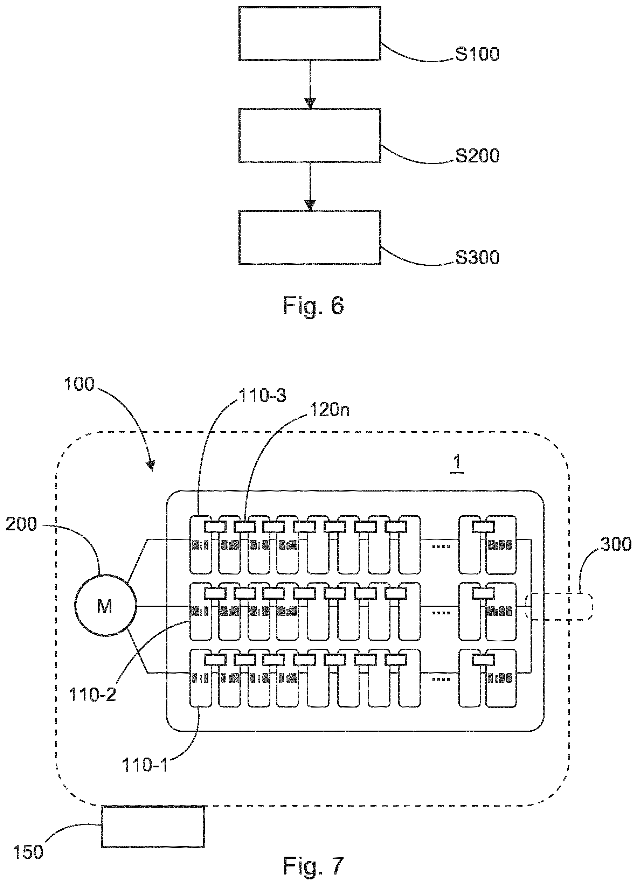

Referring to Fig. 6, which shows a flow chart, a method for deheating a battery cell controller 120 of a battery arrangement 100 (such as described above) for connecting to an electric machine 200 and/or a power supply 300, may be performed as described below.

In a step S100, there is provided a number of battery cells 100, of which a first sub-number connected in series form a first string, a second sub-number connected in series form a second string, and a third sub-number connected in series form a third string, the first string, second string and third string being connectable to the electric machine as one respective phase.

In a step S200, there is provided a number of battery cell controllers 120, each battery cell controller 120 comprising at least a power electronics arrangement 121.

In a step S300, each of the number of battery cell controllers is connected to a terminal of at least one of the number of battery cells 110 within one string, each battery cell controller 120 comprising or forming a first thermal conduction path extending from the power electronics arrangement 121 via the terminal to a body of the respective battery cell 110.

Now referring to Fig. 7, which shows the battery arrangement 100 similarly to Fig. 1, the battery arrangement 100 comprises the number of battery cells 110 forming three strings, i.e. three phases, to be connected to the electric machine 200 and/or the power supply 300. Further, the battery arrangement 100 comprises the number of battery cell controllers 120, wherein these further form a number of slave nodes. Thereby, each battery cell controller 120 connects at least one terminal of the number of battery cells within one of the strings, each battery cell controller 120 comprises the power electronics arrangement 121 and a sensor 127 (see e.g. Fig. 3) configured to acquire at least one battery cell parameter. Further, the battery arrangement 100 comprises a master node 150, configured to connect to each of the first string, second string and third string and/or to each of the slave nodes, i.e. the number of battery cell controllers 120. Further, the master node is configured to acquire a total parameter of a respective one of the first string, second string and third string. Thereby, the battery arrangement 100 is configured to verify the at least one battery cell parameter acquired and the total parameter acquired against each other. The total parameter may be, for example, the total voltage of the respective string, a current, a

In other words, the master node 150 is configured to measure and/or determine the total parameter, e.g. total voltage, its phase etc., total current, SOC, temperature, etc., of each string. This total parameter can be verified with the cell parameter, e.g. voltage, measurement by turning on one slave node, which measures the cell parameter, e.g. e.g. total voltage, its phase etc., total current, SOC, temperature, etc., at a time and compare values from slave node with the total value measured by the master node. For example, this could be performed during start up, e.g. startup of the battery arrangement 100 and/or the vehicle 1. Further, for example, in DC operation, the values from the slave nodes may be summed up and compared with the master's measured value. In AC operation, a stable condition may be controlled for a time interval, e.g. about 100 milliseconds, to collect data from the slave nodes.

Further, the battery arrangement 100 may be further configured to verify the at least one battery cell parameter acquired and the total parameter acquired against each other by controlling only one single slave node to be activated at one time, and acquiring the at least one battery cell parameter of the correspondingly activated slave node and/or battery cell.

Furthermore, the battery arrangement may be further configured to activate each of the number of slave nodes one by one, acquire the respective at least one battery cell parameter and sum them up and then verify with the total parameter acquired.

Still referring to Fig. 7, which shows the battery arrangement 100 similarly to Fig. 1, the battery arrangement 100 comprises the number of battery cells 110 forming three strings, i.e. three phases, to be connected to the electric machine 200 and/or the power supply 300. Further, the battery arrangement 100 comprises the number of battery cell controllers 120, wherein these further form a number of slave nodes. Thereby, each battery cell controller 120 connects at least one terminal of the number of battery cells within one of the strings, each battery cell controller 120 comprises the power electronics arrangement. Further, the battery arrangement 100 comprises a master node 150, configured to broadcast a control information message to each of the number of slave nodes, the control information message allows each slave node to control its power electronics arrangement 121.

In other words, the battery arrangement 100 comprises the master node 150 that is configured to dictate a behavior of the system, i.e. the battery arrangement 100, and the number of slave nodes, i.e. the battery cell controllers 120, which are mounted directly on the battery cells 110. The slaves know their position in the battery arrangement. They receive the broadcasted control information message at the same time or within an agreed time limit. They may be configured to connect and disconnect themselves depending on the control information message, e.g. a modulator angle or the like, included therein. The slaves are connected in the three strings and together they can create three sine shaped voltages, which are controlled to achieve desired phase currents, e.g. a torque. The master node 150 may be configured to generate a virtual sine wave, which may also be referred to as modulator. This is done by broadcasting a propulsion request info with predetermined pace, for example every millisecond. Broadcasting may be done over radio, wireless etc. communication or another galvanic isolated communication method. Since broadcasted transmission delay is well defined and the absolute time is transmitted in the broadcasted message, the complete system will have the same absolute time with an accuracy better than 1 microsecond. The slave nodes may have time slots scheduled to distribute information to the system. The slave nodes broadcast a message in the same manner as the master node 150. In this way, all nodes in the system will get all the information that is flowing in the network. The scheduled slave node response can be made so that three slaves (one from each string) have time to respond between every master transmission. For example, current from each string with the same time stamp is available on the network, enabling to analyze the AC current every millisecond based on an internal current sensors in the slave nodes.

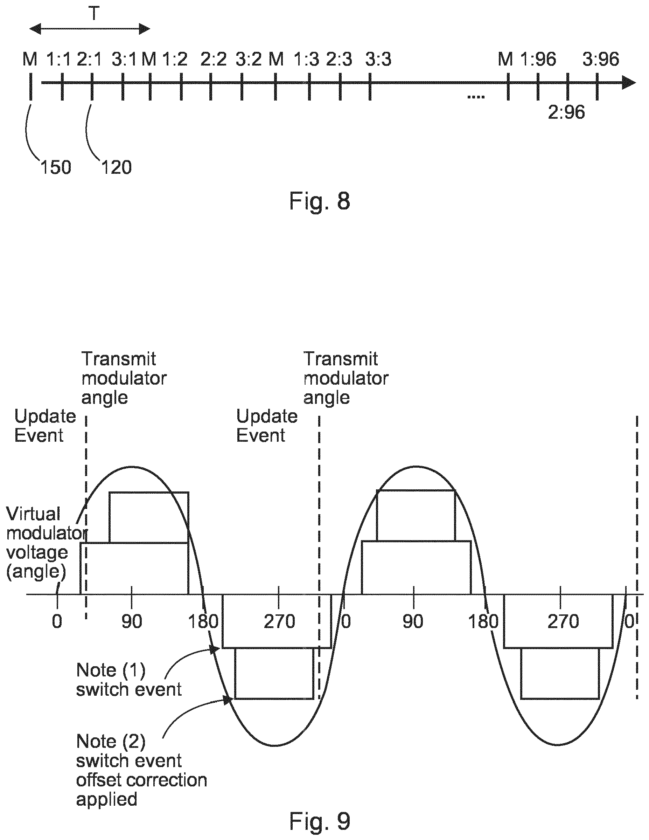

Fig. 8 shows in a timeline the scheduling of the multi-directional broadcasting as described above. The time interval T may be in the millisecond or microsecond range, e.g. about 1 ms. M may indicate the master node's 150 transmission, and 1:1, 2:1, 3:1, etc. may indicate the respective time slot of the respective battery cell controller 120, i.e. the slave node, between each broadcasting of the master node 150. As described above, the designation 1:1, 1:2, 1:3 refer to the respective strings of battery cells 110.

In other words, the master node 150 is configured to generate a virtual sine wave, which is also referred to as the modulator. This is done by broadcasting propulsion request info with predetermined pace, for example every millisecond. Broadcasting can be done over radio or other galvanic isolated communication method. Since broadcasted transmission delay is well defined and the absolute time is transmitted in the broadcasted message, the complete system, i.e. the battery arrangement 100, will have the same absolute time, e.g. with an accuracy better than 1 microsecond. The slave nodes have time slots scheduled to distribute information to the system. The slave nodes broadcast a message in the same manner as the master node. For example, even all nodes in the system may get all the information that is flowing in the network. The scheduled slave node response can be made so that three slaves (one from each string) have time to respond between every master transmission. For example, a current from each string with the same time stamp is available on the network and it is possible to analyze the AC current every millisecond based on the internal current sensors in the slave nodes.

Now referring to Fig. 9, which shows in a timeline tasks of a master node and one or more slave nodes, triggered and/or synchronized by an update event. The update events may be occur with the above time interval T. The update event is the base for all time synchronized changes in the modulator. The Master node message transmission is scheduled just after update. Then three slave node transmissions are scheduled before next master node's transmission. For example, after the update event, some or all nodes in the battery arrangement may measure a respective current at the same time. The master node may measure resolver angle, and may get or determine current modulator angle.

Still referring now to Fig. 9, the modulator, i.e. the virtual sine wave generated by the master node 150, is explained in more detail. At every update event the master node 150 may transmit a current modulator angle. The slave nodes, i.e. the battery cell controllers 120, may receive this angle, compare with their own modulator angle and, if deviating, calculate a correction. This is indicated in Fig. 9 by rectangles representing switch-on times of a slave node or a battery cell 110, respectively, and fit into the virtual modulator voltage (angle) by changing the switching times. The offset of the respective slave node may be applied once to modulator timing at the next switch on event, thereby the modulator is kept in synchronization as absolute timing is synchronized. It is noted that Fig. 9 Figure shows merely as an illustrative example a system with only two slave nodes generating a rather low resolution sine wave. It also shows the virtual sine voltage that the system generates. With a large number of slave nodes the generated voltage will be very close to true sine shape.

As described above, the virtual sine wave generated by the master node may also be referred to as the modulator. The update event may be regarded as the base for all time synchronized changes in the modulator. The master's node message transmission is scheduled just after the update event. Then, as explained above with reference to Fig. 8, the three slave node transmissions are scheduled before the next master's node transmission.

Other variations to the disclosed examples and/or embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. A battery arrangement (100) for connecting to an electric machine (200) in a vehicle, comprising:
a number of battery cells (110), of which a first sub-number connected in series form a first string (110-1), a second sub-number connected in series form a second string (110-2), and a third sub-number connected in series form a third string (110-3), the first string, second string and third string being connectable to the electric machine as one respective phase;
a number of battery cell controllers (120) forming a number of slave nodes, each battery cell controller (120) being connected to at least one terminal of an assigned one of the sub-number of battery cells, and the respective battery cell controller (120) comprising at least a power electronics arrangement (121) to selectively connect or disconnect the at least one terminal; and
a master node (150), configured to provide a virtual modulator signal to the number of slave nodes;
the number of battery cell controllers (120) being further configured to correct a respective signal generation based on the virtual modulator signal, **characterized in that**
the master node (150) is further configured to generate a virtual sine wave, by broadcasting propulsion request info with predetermined pace, as control information to be used by the slave nodes for controlling the battery cells (110), the virtual sine wave being the virtual modulator signal, and wherein
the virtual sine wave is used by the slave nodes to generate a corresponding signal by switching the assigned one of the sub-number of battery cells (110) on and off.

2. The battery arrangement according to claim 1, the virtual modulator signal comprising a modulator angle.

3. The battery arrangement according to claim 2, the number of battery cell controllers (120) being further configured to compare the virtual modulator signal provided by the master node with a respective own modulator angle to determine correction of the angle.

4. The battery arrangement according to any one of the preceding claims, the correction of the signal generation comprising changing switching timing of the power electronics arrangement (121).

5. The battery arrangement according to any one of the preceding claims, in which is defined a clocked update event having a specified time interval between each clocked update event, in which time interval bidirectional data transmission between the master node and the number of slave nodes is scheduled.

6. The battery arrangement according to claim 5, the data transmission being scheduled to allow broadcasting the virtual modulator signal by the master node and providing at string-specific feedback information of each one of the first string, second string and third string from at least one slave node of each string to the master node, within the specified time interval.

7. The battery arrangement according to claim 5 or 6, control information included in a broadcasted control information message being defined to be valid from one clocked update event to the next and to be used by the number of slave nodes from the one clocked update event until the next clocked update event.

8. The battery arrangement according to any one of claims 5 to 7, the master node being further configured to broadcast the control information message upon or after the clocked update event in a scheduled manner.

9. The battery arrangement according to any one of claims 5 to 8, the master node being further configured to receive for each clocked update event a vehicle propulsion request signal associated with the electric machine and/or the power supply, and the master node being further configured to determine the control information or updated control information to be broadcasted based on at least the received vehicle propulsion request signal.

10. The battery arrangement according to claim 5 to 9, the clocked update event being configured to trigger the number of slave nodes to acquire at least one battery cell parameter at a common timepoint, the number of slave nodes being further configured to provide the acquired at least one battery cell parameter to the master node and/or the one or more other of the number of slave nodes within the specified time interval.

11. The battery arrangement according to any of claims 5 to 10, each of the number of slave nodes being further configured to send batter cell parameter information upon an update event.

12. The battery arrangement according to any of the preceding claims, an interval between each clocked update event being in the millisecond range.

13. The battery arrangement according to any one of the preceding claims, the master node being further configured to connect to each of the first string, second string and third string via a wireless communication interface or other galvanic isolated communication method.

14. The battery arrangement according to any one of the preceding claims, the number of slave nodes being further configured to connect to the master node via a wireless communication interface or other galvanic isolated communication method.

15. The battery arrangement according to any one of the preceding claims, the number of slave nodes each have an assigned identifier to be identified and/or addressed by the master node.

16. The battery arrangement according to any one of the preceding claims, the number of slave nodes each have an assigned Media-Access-Control, MAC, address to be identified and/or addressed by the master node.

17. The battery arrangement according to any one of the preceding claims, the power electronics arrangement of each of a number of busbar cell connectors comprising a H-bridge comprising a number of power switches configured to selectively connect to the corresponding battery cell.

18. The battery arrangement according to any of the preceding claims, the master node being further configured to receive battery cell parameter information from each of the number of slaves.

19. A vehicle (1) comprising:
an electric machine (200) and
a battery arrangement (100) according to any one of the preceding claims, the battery arrangement being connected to the electric machine.

20. The vehicle according to claim 19, further comprising a power supply interface (300), the battery arrangement being further connected to the power supply interface.

21. A method for controlling a battery arrangement (100) comprising a number of battery cells (110), of which a first sub-number connected in series form a first string (110-1), a second sub-number connected in series form a second string (110-2), and a third sub-number connected in series form a third string (110-3), the first string, second string and third string being connectable to an electric machine as one respective phase, a number of battery cell controllers forming a number of slave nodes, each battery cell controller connecting at least one terminal of an assigned one of the sub-number of battery cells within one of the strings, and a master node (150), the method comprising:
providing, by the master node (150), a virtual modulator signal to each of the number of slave nodes;
correcting, by the number of battery cell controllers (120), their respective signal generation based on the virtual modulator signal, the method **characterized by**
generating, by the master node (150), a virtual sine wave, by broadcasting propulsion request info with predetermined pace, as control information to be used by the slave nodes for controlling the battery cells (110), the virtual wave signal being the virtual modulator signal, and
generating, by the slave nodes, a corresponding signal by switching the assigned one of the sub-number of battery cells (110) on and off using the virtual sine wave.

## Patentansprüche

1. Batterieanordnung (100) zum Verbinden mit einer elektrischen Maschine (200) in einem Fahrzeug, umfassend:
eine Anzahl von Batteriezellen (110), von denen eine in Reihe verbundene erste Teilanzahl einen ersten Strang (110-1) bildet, eine in Reihe verbundene zweite Teilanzahl einen zweiten Strang (110-2) bildet und eine in Reihe verbundene dritte Teilanzahl einen dritten Strang (110-3) bildet, wobei der erste Strang, der zweite Strang und der dritte Strang mit der elektrischen Maschine als eine jeweilige Phase verbindbar sind;
eine Anzahl von Batteriezellensteuerungen (120), die eine Anzahl von Slave-Knoten bilden, wobei jede Batteriezellensteuerung (120) mit mindestens einem Anschluss einer zugewiesenen der Teilanzahl von Batteriezellen verbunden ist und die jeweilige Batteriezellensteuerung (120) mindestens eine Leistungselektronikanordnung (121) zum selektiven Verbinden oder Trennen des mindestens einen Anschlusses umfasst; und
einen Master-Knoten (150), der dazu ausgelegt ist, der Anzahl von Slave-Knoten ein virtuelles Modulatorsignal bereitzustellen;
wobei die Anzahl von Batteriezellensteuerungen (120) ferner dazu ausgelegt ist, eine jeweilige Signalerzeugung basierend auf dem virtuellen Modulatorsignal zu korrigieren, **dadurch gekennzeichnet, dass**
der Master-Knoten (150) ferner dazu ausgelegt ist, eine virtuelle Sinuswelle durch Übermitteln von Antriebsanforderungsinformationen mit vorbestimmtem Tempo als Steuerinformationen zu erzeugen, die durch die Slave-Knoten zum Steuern der Batteriezellen (110) zu verwenden sind, wobei die virtuelle Sinuswelle das virtuelle Modulatorsignal ist, und wobei
die virtuelle Sinuswelle von den Slave-Knoten verwendet wird, um ein entsprechendes Signal durch Ein- und Ausschalten der zugewiesenen einen der Teilanzahl von Batteriezellen (110) zu erzeugen.

2. Batterieanordnung nach Anspruch 1, wobei das virtuelle Modulatorsignal einen Modulatorwinkel umfasst.

3. Batterieanordnung nach Anspruch 2, wobei die Anzahl von Batteriezellensteuerungen (120) ferner dazu ausgelegt ist, das virtuelle Modulatorsignal, das durch den Master-Knoten bereitgestellt wird, mit einem jeweiligen eigenen Modulatorwinkel zu vergleichen, um eine Korrektur des Winkels zu bestimmen.

4. Batterieanordnung nach einem der vorhergehenden Ansprüche, wobei die Korrektur der Signalerzeugung Ändern des Schalttimings der Leistungselektronikanordnung (121) umfasst.

5. Batterieanordnung nach einem der vorhergehenden Ansprüche, in der ein getaktetes Aktualisierungsereignis definiert ist, das ein spezifiziertes Zeitintervall zwischen jedem getakteten Aktualisierungsereignis aufweist, wobei in dem Zeitintervall eine bidirektionale Datenübertragung zwischen dem Master-Knoten und der Anzahl von Slave-Knoten geplant ist.

6. Batterieanordnung nach Anspruch 5, wobei die Datenübertragung so geplant ist, dass sie das Übermitteln des virtuellen Modulatorsignals durch den Master-Knoten ermöglicht und eine strangspezifische Rückmeldungsinformation sowohl des ersten Strangs, des zweiten Strangs als auch des dritten Strangs von mindestens einem Slave-Knoten jedes Strangs zu dem Master-Knoten innerhalb des spezifizierten Zeitintervalls bereitstellt.

7. Batterieanordnung nach Anspruch 5 oder 6, wobei eine Steuerinformation, die in einer übermittelten Steuerinformationsnachricht enthalten ist, so definiert ist, dass sie von einem getakteten Aktualisierungsereignis zum nächsten gültig ist und durch die Anzahl von Slave-Knoten von dem einen getakteten Aktualisierungsereignis bis zum nächsten getakteten Aktualisierungsereignis verwendet werden soll.

8. Batterieanordnung nach einem der Ansprüche 5 bis 7, wobei der Master-Knoten ferner dazu ausgelegt ist, die Steuerinformationsnachricht bei oder nach dem getakteten Aktualisierungsereignis auf eine geplante Weise zu übermitteln.

9. Batterieanordnung nach einem der Ansprüche 5 bis 8, wobei der Master-Knoten ferner dazu ausgelegt ist, für jedes getaktete Aktualisierungsereignis ein Fahrzeugantriebsanforderungssignal zu empfangen, das mit der elektrischen Maschine und/oder der Leistungsversorgung assoziiert ist, und wobei der Master-Knoten ferner dazu ausgelegt ist, die Steuerinformationen oder aktualisierten Steuerinformationen, die übermittelt werden sollen, basierend auf zumindest dem empfangenen Fahrzeugantriebsanforderungssignal zu bestimmen.

10. Batterieanordnung nach Anspruch 5 bis 9, wobei das getaktete Aktualisierungsereignis dazu ausgelegt ist, die Anzahl von Slave-Knoten auszulösen, mindestens einen Batteriezellenparameter zu einem gemeinsamen Zeitpunkt zu erfassen, wobei die Anzahl von Slave-Knoten ferner dazu ausgelegt ist, den erfassten mindestens einen Batteriezellenparameter dem Master-Knoten und/oder dem einen oder den mehreren anderen der Anzahl von Slave-Knoten innerhalb des spezifizierten Zeitintervalls bereitzustellen.

11. Batterieanordnung nach einem der Ansprüche 5 bis 10, wobei jeder der Anzahl von Slave-Knoten ferner dazu ausgelegt ist, bei einem Aktualisierungsereignis Batteriezellenparameterinformationen zu senden.

12. Batterieanordnung nach einem der vorhergehenden Ansprüche, wobei ein Intervall zwischen jedem getakteten Aktualisierungsereignis im Millisekundenbereich liegt.

13. Batterieanordnung nach einem der vorhergehenden Ansprüche, wobei der Master-Knoten ferner dazu ausgelegt ist, über eine Drahtloskommunikationsschnittstelle oder ein anderes galvanisch isoliertes Kommunikationsverfahren mit sowohl dem ersten Strang, dem zweiten Strang als auch dem dritten Strang verbunden zu werden.

14. Batterieanordnung nach einem der vorhergehenden Ansprüche, wobei die Anzahl von Slave-Knoten ferner dazu ausgelegt ist, über eine Drahtloskommunikationsschnittstelle oder ein anderes galvanisch isoliertes Kommunikationsverfahren mit dem Master-Knoten verbunden zu werden.

15. Batterieanordnung nach einem der vorhergehenden Ansprüche, wobei die Anzahl von Slave-Knoten jeweils eine zugewiesene Kennung aufweisen, die durch den Master-Knoten zu identifizieren und/oder zu adressieren ist.

16. Batterieanordnung nach einem der vorhergehenden Ansprüche, wobei die Anzahl von Slave-Knoten jeweils eine zugewiesene Medienzugangssteuerungs- bzw. MAC-Adresse aufweisen, die durch den Master-Knoten zu identifizieren und/oder zu adressieren ist.

17. Batterieanordnung nach einem der vorhergehenden Ansprüche, wobei die Leistungselektronikanordnung jedes einer Anzahl von Sammelschienenzellenverbindern eine H-Brücke umfasst, die eine Anzahl von Leistungsschaltern umfasst, die dazu ausgelegt sind, selektiv mit der entsprechenden Batteriezelle verbunden zu werden.

18. Batterieanordnung nach einem der vorhergehenden Ansprüche, wobei der Master-Knoten ferner dazu ausgelegt ist, Batteriezellenparameterinformationen von jedem der Anzahl von Slaves zu empfangen.

19. Fahrzeug (1), umfassend:
eine elektrische Maschine (200), und
eine Batterieanordnung (100) nach einem der vorhergehenden Ansprüche, wobei die Batterieanordnung mit der elektrischen Maschine verbunden ist.

20. Fahrzeug nach Anspruch 19, ferner umfassend eine Leistungsversorgungsschnittstelle (300), wobei die Batterieanordnung ferner mit der Leistungsversorgungsschnittstelle verbunden ist.

21. Verfahren zum Steuern einer Batterieanordnung (100), umfassend eine Anzahl von Batteriezellen (110), von denen eine in Reihe verbundene erste Teilanzahl einen ersten Strang (110-1) bildet, eine in Reihe verbundene zweite Teilanzahl einen zweiten Strang (110-2) bildet und eine in Reihe verbundene dritte Teilanzahl einen dritten Strang (110-3) bildet, wobei der erste Strang, der zweite Strang und der dritte Strang mit einer elektrischen Maschine als eine jeweilige Phase verbindbar sind, eine Anzahl von Batteriezellensteuerungen, die eine Anzahl von Slave-Knoten bildet, wobei jede Batteriezellensteuerung mindestens einen Anschluss einer zugewiesenen einen der Teilanzahl von Batteriezellen innerhalb eines der Stränge verbindet, und einen Master-Knoten (150), wobei das Verfahren umfasst:
Bereitstellen, durch den Master-Knoten (150), eines virtuellen Modulatorsignals an jeden der Anzahl von Slave-Knoten;
Korrigieren, durch die Anzahl von Batteriezellensteuerungen (120), ihrer jeweiligen Signalerzeugung basierend auf dem virtuellen Modulatorsignal, wobei das Verfahren **gekennzeichnet ist durch**
Erzeugen, durch den Master-Knoten (150), einer virtuellen Sinuswelle durch Übermitteln von Antriebsanforderungsinformationen mit vorbestimmtem Tempo als Steuerinformationen zu erzeugen, die durch die Slave-Knoten zum Steuern der Batteriezellen (110) zu verwenden sind, wobei das virtuelle Wellensignal das virtuelle Modulatorsignal ist, und
Erzeugen, durch die Slave-Knoten, eines entsprechenden Signals durch Ein- und Ausschalten der zugewiesenen einen der Teilanzahl von Batteriezellen (110) unter Verwendung der virtuellen Sinuswelle.

## Revendications

1. Agencement de batterie (100) destiné à être connecté à une machine électrique (200) dans un véhicule, comprenant :
un nombre de cellules de batterie (110), dont un premier sous-nombre connecté en série forme une première chaîne (110-1), un deuxième sous-nombre connecté en série forme une deuxième chaîne (110-2), et un troisième sous-nombre connecté en série forme une troisième chaîne (110-3), la première chaîne, la deuxième chaîne et la troisième chaîne étant susceptibles d'être connectées à la machine électrique en tant que phase respective ;
un nombre de contrôleurs de cellule de batterie (120) formant un nombre de nœuds esclaves, chaque contrôleur de cellule de batterie (120) étant connecté à au moins une borne d'une cellule de batterie assignée parmi le sous-nombre de cellules de batterie, et le contrôleur de cellule de batterie (120) respectif comprenant au moins un agencement d'électronique de puissance (121) pour connecter ou déconnecter sélectivement l'au moins une borne ; et
un nœud maître (150), configuré pour fournir un signal de modulateur virtuel au nombre de nœuds esclaves ;
le nombre de contrôleurs de cellule de batterie (120) étant en outre configurés pour corriger une génération de signal respective sur la base du signal de modulateur virtuel, **caractérisé en ce que**
le nœud maître (150) est en outre configuré pour générer une onde sinusoïdale virtuelle, par diffusion d'informations de demande de propulsion à une cadence prédéterminée, en tant qu'informations de commande destinées être utilisées par les nœuds esclaves pour commander les cellules de batterie (110), l'onde sinusoïdale virtuelle constituant le signal de modulateur virtuel, et dans lequel
l'onde sinusoïdale virtuelle est utilisée par les nœuds esclaves pour générer un signal correspondant par commutation en circuit et hors circuit de la cellule de batterie assignée parmi le sous-nombre de cellules de batterie (110).

2. Agencement de batterie selon la revendication 1, le signal de modulateur virtuel comprenant un angle de modulateur.

3. Agencement de batterie selon la revendication 2, le nombre de contrôleurs de cellule de batterie (120) étant en outre configurés pour comparer le signal de modulateur virtuel fourni par le nœud maître avec un angle de modulateur propre respectif afin de déterminer une correction de l'angle.

4. Agencement de batterie selon l'une quelconque des revendications précédentes, la correction de la génération de signal comprenant la modification d'instants de commutation de l'agencement d'électronique de puissance (121).

5. Agencement de batterie selon l'une quelconque des revendications précédentes, dans lequel est défini un événement de mise à jour cadencé présentant un intervalle de temps spécifié entre chaque événement de mise à jour cadencé, intervalle de temps dans lequel une transmission de données bidirectionnelle entre le nœud maître et le nombre de nœuds esclaves est planifiée.

6. Agencement de batterie selon la revendication 5, la transmission de données étant planifiée pour permettre la diffusion du signal de modulateur virtuel par le nœud maître et la fourniture d'informations de retour, spécifiques à chaque chaîne, de chacune des première chaîne, deuxième chaîne et troisième chaîne depuis au moins un nœud esclave de chaque chaîne vers le nœud maître, au sein de l'intervalle de temps spécifié.

7. Agencement de batterie selon la revendication 5 ou 6, des informations de commande comprises dans un message d'informations de commande diffusé étant définies comme étant valables depuis un événement de mise à jour cadencé jusqu'au suivant et devant être utilisées par le nombre de nœuds esclaves depuis l'événement de mise à jour cadencé jusqu'à l'événement de mise à jour cadencé suivant.

8. Agencement de batterie selon l'une quelconque des revendications 5 à 7, le nœud maître étant en outre configuré pour diffuser le message d'informations de commande lors ou après l'événement de mise à jour cadencé d'une manière planifiée.

9. Agencement de batterie selon l'une quelconque des revendications 5 à 8, le nœud maître étant en outre configuré pour recevoir, pour chaque événement de mise à jour cadencé, un signal de demande de propulsion de véhicule associé à la machine électrique et/ou à l'alimentation électrique, et le nœud maître étant en outre configuré pour déterminer les informations de commande ou les informations de commande mises à jour à diffuser sur la base au moins du signal de demande de propulsion de véhicule reçu.

10. Agencement de batterie selon les revendications 5 à 9, l'événement de mise à jour cadencé étant configuré pour déclencher le nombre de nœuds esclaves afin d'acquérir au moins un paramètre de cellule de batterie à un point temporel commun, le nombre de nœuds esclaves étant en outre configurés pour fournir l'au moins un paramètre de cellule de batterie acquis au nœud maître et/ou aux un ou plusieurs autres du nombre de nœuds esclaves au sein de l'intervalle de temps spécifié.

11. Agencement de batterie selon l'une quelconque des revendications 5 à 10, chacun du nombre de nœuds esclaves étant en outre configuré pour envoyer des informations de paramètre de cellule de batterie lors d'un événement de mise à jour.

12. Agencement de batterie selon l'une quelconque des revendications précédentes, un intervalle entre chaque événement de mise à jour cadencé étant de l'ordre de la milliseconde.

13. Agencement de batterie selon l'une quelconque des revendications précédentes, le nœud maître étant en outre configuré pour se connecter à chacune des première chaîne, deuxième chaîne et troisième chaîne au moyen d'une interface de communication sans fil ou d'un autre procédé de communication isolé galvaniquement.

14. Agencement de batterie selon l'une quelconque des revendications précédentes, le nombre de nœuds esclaves étant en outre configurés pour se connecter au nœud maître au moyen d'une interface de communication sans fil ou d'un autre procédé de communication isolé galvaniquement.

15. Agencement de batterie selon l'une quelconque des revendications précédentes, le nombre de nœuds esclaves possédant chacun un identifiant assigné permettant leur identification et/ou adressage par le nœud maître.

16. Agencement de batterie selon l'une quelconque des revendications précédentes, le nombre de nœuds esclaves possédant chacun une adresse de contrôle d'accès au support, MAC, assignée permettant leur identification et/ou adressage par le nœud maître.

17. Agencement de batterie selon l'une quelconque des revendications précédentes, l'agencement d'électronique de puissance de chacun d'un nombre de connecteurs de cellule de barre omnibus comprenant un pont en H comprenant un nombre de commutateurs de puissance configurés pour se connecter sélectivement à la cellule de batterie correspondante.

18. Agencement de batterie selon l'une quelconque des revendications précédentes, le nœud maître étant en outre configuré pour recevoir des informations de paramètre de cellule de batterie depuis chacun du nombre d'esclaves.

19. Véhicule (1) comprenant :
une machine électrique (200) et
un agencement de batterie (100) selon l'une quelconque des revendications précédentes, l'agencement de batterie étant connecté à la machine électrique.

20. Véhicule selon la revendication 19, comprenant en outre une interface d'alimentation électrique (300), l'agencement de batterie étant en outre connecté à l'interface d'alimentation électrique.

21. Procédé de commande d'un agencement de batterie (100) comprenant un nombre de cellules de batterie (110), dont un premier sous-nombre connecté en série forme une première chaîne (110-1), un deuxième sous-nombre connecté en série forme une deuxième chaîne (110-2), et un troisième sous-nombre connecté en série forme une troisième chaîne (110-3), la première chaîne, la deuxième chaîne et la troisième chaîne étant susceptibles d'être connectées à une machine électrique en tant que phase respective, un nombre de contrôleurs de cellule de batterie formant un nombre de nœuds esclaves, chaque contrôleur de cellule de batterie connectant au moins une borne d'une cellule de batterie assignée parmi le sous-nombre de cellules de batterie au sein de l'une des chaînes, et un nœud maître (150), le procédé comprenant :
la fourniture, par le nœud maître (150), d'un signal de modulateur virtuel à chacun du nombre de nœuds esclaves ;
la correction, par le nombre de contrôleurs de cellule de batterie (120), de leur génération de signal respective sur la base du signal de modulateur virtuel, le procédé est **caractérisé par**
la génération, par le nœud maître (150), d'une onde sinusoïdale virtuelle, par diffusion d'informations de demande de propulsion à une cadence prédéterminée, en tant qu'informations de commande destinées être utilisées par les nœuds esclaves pour commander les cellules de batterie (110), l'onde sinusoïdale virtuelle constituant le signal de modulateur virtuel, et
la génération, par les nœuds esclaves, d'un signal correspondant par commutation en circuit et hors circuit de la cellule de batterie assignée parmi le sous-nombre de cellules de batterie (110) au moyen de l'onde sinusoïdale virtuelle.
